# EUROPEAN PATENT APPLICATION

(11) **EP 2 699 028 A2**
(43) Date of publication of application: **19.02.2014**
(21) Application number: 11782943.2
(22) Date of filing: 18.05.2011
(51) Int. Cl.: H04W 4/12, H04L 12/58

(54) **METHOD AND APPARATUS FOR SENDING MESSAGES**

(71) Applicant: Huawei Device Co., Ltd., Shenzhen, Guangdong 518129 (CN)
(72) Inventor: LIAN, Hai, Shenzhen Guangdong 518129 (CN)
(74) Representative: Epping - Hermann - Fischer
(86) International application number: PCT/CN2011/074247
(87) International publication number: WO 2011/144026

(57) **Abstract**

Embodiments of the present invention disclose a message sending method and apparatus, relate to the field of communications technologies and are invented to shorten a service delay. A message sending method includes: when a terminal is in a data service sleep state, receiving an instant messaging message sent by the terminal; determining a size of the instant messaging message; and sending the instant messaging message of the terminal through a signaling channel when the instant messaging message is smaller than preset bytes. The embodiments of the present invention are mainly applicable to a value-added service.

## Description

### TECHNICAL FIELD

The present invention relates to the field of communications technologies, and in particular to a message sending method and apparatus.

### BACKGROUND

With the development of networks, IP (Internet Protocol, Internet protocol)-based value-added services become more and more popular. How to ensure improvement of efficiency of value-added services with limited network resources is always a problem to be solved in the industry.

In a conventional value-added service, such as QQ, MSN, and video calling, when a terminal is in a data service sleep state, if information still needs to be sent, a physical channel needs to be reestablished, and then a message is sent through a dedicated service channel. However, sending a message of a value-added service in this manner needs to take time to establish a channel, resulting in a long delay of the service.

### SUMMARY

Embodiments of the present invention provide a message sending method and apparatus, so as to shorten a service delay.

The embodiments of the present invention adopt the following technical solutions:
A message sending method includes:
   when a terminal is in a data service sleep state, receiving an instant messaging message sent by the terminal;
   determining a size of the instant messaging message; and
   sending the instant messaging message of the terminal through a signaling channel when the instant messaging message is smaller than preset bytes.
A message sending apparatus includes:
   a message receiving unit, configured to, when a terminal is in a data service sleep state, receive an instant messaging message sent by the terminal;
   a determining unit, configured to determine a size of the instant messaging message; and
   a message sending unit, configured to send the instant messaging message of the terminal through a signaling channel when the instant messaging message is smaller than preset bytes.

In the message sending method and apparatus provided in the embodiments of the present invention, when a terminal is in a data service sleep state, an instant messaging message sent by the terminal is received, and a size of the instant messaging message is determined. The instant messaging message of the terminal is sent through a signaling channel when the instant messaging message is smaller than preset bytes. By using the method and apparatus in the embodiments of the present invention, when a terminal is in a data service sleep state, a service channel does not need to be established for an instant messaging message which is smaller than preset bytes and is sent by the terminal, and instead, the instant messaging message is sent through a signaling channel, thereby ensuring rapid sending of an instant messaging message and shortening a service delay.

### BRIEF DESCRIPTION OF DRAWINGS

To describe the technical solutions in the embodiments of the present invention more clearly, the following briefly introduces accompanying drawings required for describing the embodiments. Apparently, the accompanying drawings in the following description show merely some embodiments of the present invention, and a person of ordinary skill in the art may further obtain other drawings according to these accompanying drawings without creative efforts.
FIG. 1 is a flow chart of a message sending method according to Embodiment 1 of the present invention;
FIG. 2 is another flow chart of a message sending method according to Embodiment 1 of the present invention;
FIG. 3 is a schematic diagram of a message sending apparatus according to Embodiment 2 of the present invention; and
FIG. 4 is a structural diagram of a message sending apparatus according to Embodiment 2 of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

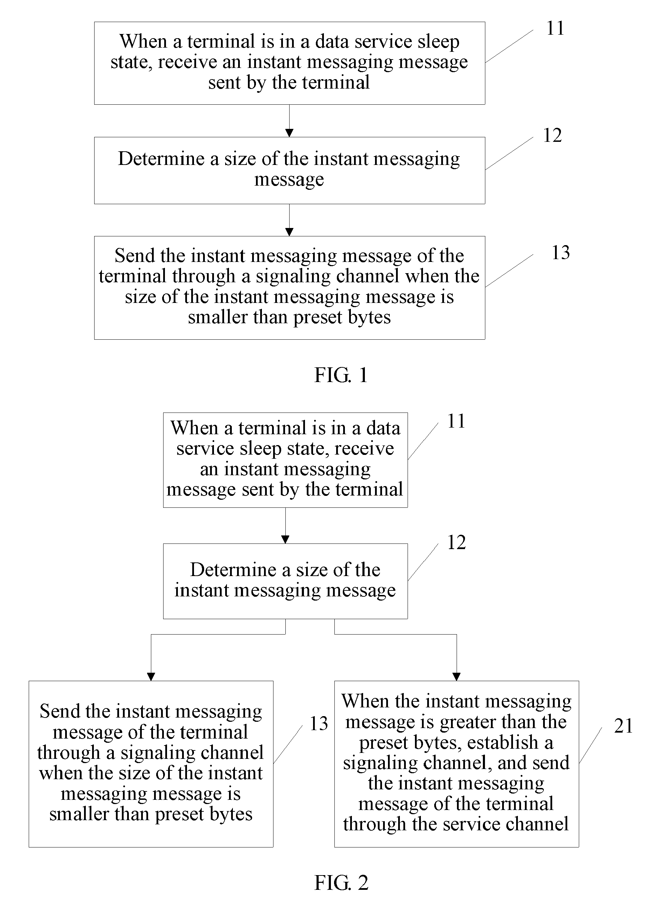

As shown in FIG. 1, a message sending method according to Embodiment 1 of the present invention includes:
Step 11: When a terminal is in a data service sleep state, receive an instant messaging message sent by the terminal.
   The instant messaging message may be a QQ message, an MSN message, a video calling message, and the like.
Step 12: Determine a size of the instant messaging message.
   When an IP address has been allocated to the terminal, if the terminal is in a data service sleep state and an instant messaging message still needs to be sent, a size of the instant messaging message may be determined when the instant messaging message is received. Specifically, the size of the instant messaging message is decided by a packet forming module and may be determined through a fundamental protocol.
Step 13: Send the instant messaging message of the terminal through a signaling channel when the instant messaging message is smaller than preset bytes.

According to a result of step 12, the size of the instant messaging message is compared with preset bytes. If the instant messaging message is smaller than the preset bytes, the instant messaging message of the terminal is sent through a signaling channel. For example, the instant messaging message may be carried through DOS (Data Over Signaling Protocol, data over signaling protocol) signaling.

According to a characteristic of the signaling channel, the signaling channel cannot carry data greater than 50 bytes. Therefore, in this embodiment, the preset bytes may be set to 50 bytes, or the preset bytes may be further set to other values smaller than 50 bytes, for example, 30 bytes, so as to further shorten a delay.

By using the method in the embodiment of the present invention, when a terminal is in a data service sleep state, a service channel does not need to be established for an instant messaging message which is smaller than preset bytes and is sent by the terminal, and instead, the instant messaging message is sent through a signaling channel, thereby ensuring rapid sending of an instant messaging message and shortening a service delay. Moreover, because a service channel does not need to be established, network resources are also saved.

As shown in FIG. 2, on the basis of FIG. 1, the method in Embodiment 1 of the present invention may further include:
Step 21: When the instant messaging message is greater than the preset bytes, establish a service channel, and send the instant messaging message of the terminal through the service channel.

This process is the same as that in the prior art, and is no longer described in detail here.

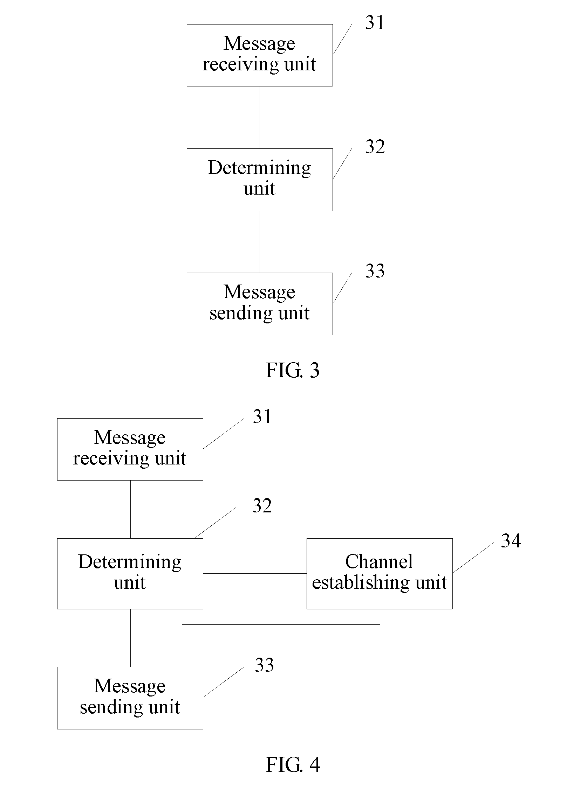

As shown in FIG. 3, a message sending apparatus in Embodiment 2 of the present invention includes: a message receiving unit 31, configured to, when a terminal is in a data service sleep state, receive an instant messaging message sent by the terminal; a determining unit 32, configured to determine a size of the instant messaging message; and a message sending unit 33, configured to send the instant messaging message of the terminal through a signaling channel when the instant messaging message is smaller than preset bytes.

Referring to the foregoing description, the preset bytes may be set to 50 bytes, or the preset bytes may be further set to other values smaller than 50 bytes. Therefore, the message sending unit 33 is specifically configured to send the instant messaging message of the terminal through DOS signaling when the instant messaging message is smaller than 50 bytes.

As shown in FIG. 4, the apparatus may further include: a channel establishing unit 34, configured to, when the instant messaging message is greater than the preset bytes, establish a service channel. In this case, the message sending unit 33 is further configured to send the instant messaging message of the terminal through the service channel.

By using the apparatus in the embodiment of the present invention, when a terminal is in a data service sleep state, a service channel does not need to be established for an instant messaging message which is smaller than preset bytes and is sent by the terminal, and instead, the instant messaging message is sent through a signaling channel, thereby ensuring rapid sending of an instant messaging message and shortening a service delay. Moreover, because a service channel does not need to be established, network resources are also saved.

A person of ordinary skill in the art may understand that all or a part of the processes of the methods in the foregoing embodiments may be implemented by a computer program instructing relevant hardware. The program may be stored in a computer readable storage medium. When the program runs, the processes of the foregoing methods in the embodiments are performed. The storage medium may be a magnetic disk, an optical disk, a read-only memory (Read-Only Memory, ROM), or a random access memory (Random Access Memory, RAM), or the like.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A message sending method, comprising:
when a terminal is in a data service sleep state, receiving an instant messaging message sent by the terminal;
determining a size of the instant messaging message; and
sending the instant messaging message of the terminal through a signaling channel when the instant messaging message is smaller than preset bytes.

2. The method according to claim 1, wherein the preset bytes are the number of bytes which is smaller than or equal to 50 bytes; and
the sending the instant messaging message of the terminal through a signaling channel when the instant messaging message is smaller than preset bytes specifically is:
sending the instant messaging message of the terminal through DOS signaling when the instant messaging message is smaller than 50 bytes.

3. The method according to claim 1, wherein the method further comprises:
when the instant messaging message is greater than the preset bytes, establishing a service channel; and
sending the instant messaging message of the terminal through the service channel.

4. A message sending apparatus, comprising:
a message receiving unit, configured to, when a terminal is in a data service sleep state, receive an instant messaging message sent by the terminal;
a determining unit, configured to determine a size of the instant messaging message; and
a message sending unit, configured to send the instant messaging message of the terminal through a signaling channel when the instant messaging message is smaller than preset bytes.

5. The apparatus according to claim 4, wherein the preset bytes are the number of bytes which is smaller than or equal to 50 bytes; and
the message sending unit is specifically configured to send the instant messaging message of the terminal through DOS signaling when the instant messaging message is smaller than 50 bytes.

6. The apparatus according to claim 4 or 5, wherein the apparatus further comprises:
a channel establishing unit, configured to, when the instant messaging message is greater than the preset bytes, establish a service channel; and
the message sending unit is further configured to send the instant messaging message of the terminal through the service channel.
